# FASCICULE DE BREVET EUROPEEN

(11) **EP 0 387 233 B1**
(45) Date de publication et mention de la délivrance du brevet: **24.11.1993**
(21) Numéro de dépôt: 90870036.2
(22) Date de dépôt: 07.03.1990
(51) Int. Cl.: A01G 1/04

(54) **Procédé pour la culture de champignons et substrat utilisé pour la mise en oeuvre de ce procédé**
Verfahren zur Zucht von Pilzen und Substrat zur Durchführung dieses Verfahrens
Method for cultivating mushrooms and substrate used for carrying out said method

(30) Priorité: 08.03.1989 BE 8900244
(43) Date de publication de la demande: 12.09.1990
(73) Titulaire: UNALIT N.V., B-9500 Geraardsbergen (BE)
(72) Inventeur: Clingez, Marc, B-4261 Latinne (BE)
(74) Mandataire: Overath, Philippe

(56) Documents cités:
- EP-A- 0 147 349
- EP-A- 0 248 636
- DE-A- 3 734 509
- FR-A- 2 086 555
- FR-A- 2 328 408
- FR-A- 2 369 791
- FR-A- 2 398 449
- GB-A- 2 181 122
- US-A- 4 071 973

## Description

L'invention consiste en un procédé pour la culture de champignons ainsi qu'en un substrat utilisé pour cette culture. Il vise en particulier des champignons saprophytes sylvestres lignivores comestibles de la classe des Basidiomycètes, tel le SHII-TAKE (Lentinus edodes, qui est un champignon d'origine asiatique dont le mycélium, en conditions naturelles, se développe dans le bois des troncs d'arbres morts de divers abres feuillus (SHII = chêne et TAKE = champignon).

En raison de ses qualités organoleptiques et médicinales, la demande pour cette espèce a considérablement augmenté ces dernières années. La technique artisanale sur bûches ne suffit plus à la satisfaire. La domestication de cette espèce présente donc un intérêt économique certain, en raison du prix élevé de ce champignon sur les marchés spécialisés.

Pour satisfaire la demande croissante, divers substrats reconstitués ont été testés pour permettre sa culture en conditions contrôlées et ainsi réduire la durée du cycle naturel.

Parmi ceux-ci, un substrat pasteurisé à base de sciures de bois, de paille et de son, semble donner des résultats satisfaisants mais avec une répétitivité encore trop insuffisante pour assurer une bonne régularité de production.

Le brevet européen publié sous le numéro 0 075 614 divulgue l'existence d'une technique industrielle de production de mycélium et de carpophores de champignons, dont le SHII-TAKE. Dans ce document aucune indication concernant la composition des substrats n'est stipulée, ce qui laisse le choix pour toute matière d'origine animale et/ou végétale.

La demande de brevet européen N°0 248 636 décrit également un procédé de culture de champignons et mentionne les conditions de température et d'humidité relative pour favoriser le développement mycélien et pour la croissance des carpophores.

L'un des plus grands problèmes rencontrés dans les procédés décrits est la nécessité d'appliquer aux substrats un traitement thermique de stérilisation ou de pasteurisation, qui exige un contrôle délicat et donc, des investissements importants en matériel.

La présente invention a pour objet de proposer un procédé pour la culture de champignons utilisant un substrat, facile à mettre en oeuvre, ne requérant pas de traitement de pasteurisation et disposant d'une bonne réserve nutritive sous un volume réduit.

Le procédé pour la culture des champignons selon l'invention est caractérisé en ce qu'on dépose du mycélium sur un substrat sous forme de panneaux essentiellement composés de fibres de bois et dont la cohésion est assurée substantiellement par des constituants naturels du bois; et qu'on soumet le substrat à des conditions de température et d'humidité usuelles favorisant d'abord le développement mycélien et ensuite la croissance des carpophores.

D'autres caractéristiques de l'invention seront mises en évidence lors de la description d'un exemple de mise en oeuvre, illustré par les figures annexées qui représentent :
- figure 1 :: un schéma de la chaîne de fabrication des panneaux de fibres utilisés pour la culture des champignons selon l'invention;
- figure 2 :: un schéma de mise en oeuvre des panneaux pour constituer un "kit" de substrat;
- figure 3 :: un schéma d'un ensemble de "kits" placés dans une cellule conditionnée de production.

Suivant l'invention on utilise un substrat de culture conditionné sous forme de panneaux, essentiellement composés de fibres de bois dont la cohésion est assurée par des constituants naturels du bois, dont la lignine.

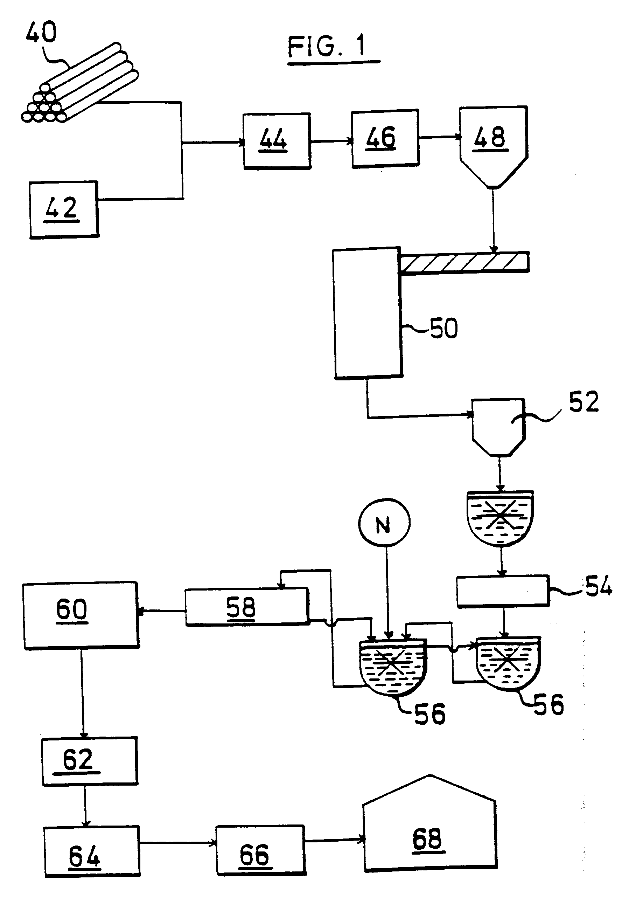

Les fibres utilisées sont du type végétal, arbres, plantes, etc... de la famille des essences feuillues ou des conifères. De préférence, on utilisera des essences feuillues dont le chêne, le peuplier, le hêtre, etc... Les fibres sont transformées en panneaux selon le procédé représenté à la figure 1. Des grumes (40) et des déchets de scieries (42) sont réduits en copeaux dans une déchiqueteuse (44). Ces copeaux sont amenés dans des silos (48) par un tamis déchiqueteur (46). Ils sont ensuite dosés et transportés dans des défibreuses (50). Les fibres résultantes sont mélangées à de l'eau, dans un cyclone (52), pour former une pâte qui est encore affinée par passage dans un raffineur (54) jusqu'à obtention d'une pulpe homogène. La pulpe est stockée dans des réservoirs (56) où elle peut éventuellement être enrichie par ajout de matières organiques azotées. Ces additifs peuvent être d'origine végétale et/ou animale (luzerne, son, farine de plumes de poulet,...) et sont ajoutés à raison de 1 à 10% du poids humide de pulpe. La pulpe est amenée sur le tapis sans fin d'une machine de conformation (60) par pompage au travers d'une jauge de débit (58). Par passages successifs entre des rouleaux d'essorage, elle est transformée, à la sortie de cette machine, en un matelas humide d'une siccité de 30% environ. Le produit fini est amené à une teneur en matière sèche de 95% environ par élimination progressive de l'eau résiduelle dans un four en continu (62) et des chambres de climatisation (64). Le séchage, dans le four en continu, est réalisé à une température moyenne de 160°C; il peut donc pratiquement être considéré comme un traitement thermique de stérilisation. Les panneaux de fibres obtenus ont une densité de 250 kg/m³. Ils sont alors découpés au format voulu (66) puis empilés sur palettes, recouverts d'une housse plastique de protection et stockés en magasin (68). La densité des panneaux peut varier en fonction des conditions de fabrication et des essences utilisées. Dans le cadre de l'invention, elle doit cependant rester inférieure à environ 500 kg/m³.

On peut considérer que les panneaux ainsi produits sont fabriqués selon un procédé biologique, car aucune substance synthétique de cohésion (colles), généralement utilisée dans ce type de fabrication, n'est ajoutée.

Les panneaux sont stockés au sec et à l'abri de sources éventuelles de contamination.

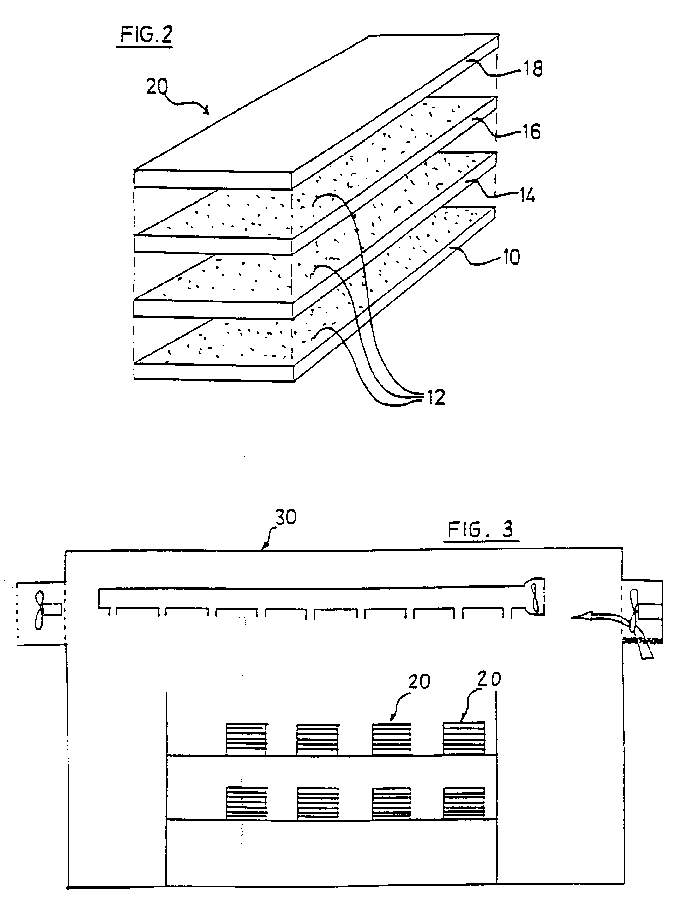

Comme schématisé par la figure 2, la mise en oeuvre des panneaux pour constituer un "kit" est réalisée comme suit: un premier panneau humidifié (10) est posé à plat. On répartit, sur la face supérieure de ce premier panneau (10), la quantité de mycélium requise (12). Un second panneau humidifié (14) est déposé par dessus, à la surface duquel une nouvelle quantité de mycélium (12) est répartie. On recommence ces opérations de manière à constituer des sandwiches successifs, empilés jusqu'à l'obtention du "kit" (20) qui peut comporter un nombre variable de panneaux (10, 14, 16, 18...), entre lesquels le mycélium est réparti.

Avant inoculation, les panneaux doivent être humidifiés. A cet égard, il est nécessaire de prendre certaines précautions, afin de respecter les normes d'hygiène requises en culture de champignon. L'hydratation doit obligatoirement être réalisée au moyen d'eau alimentaire, éventuellement amenée à une température de 25°C.

Les panneaux sont hydratés par aspersion ou immersion jusqu'à obtenir une teneur en eau de 70% environ.

Cette manipulation et les suivantes doivent être de préférence effectuées dans un local en surpression d'air filtré.

La quantité de mycélium utilisée peut varier, selon le type d'utilisateur, de 1 à 5% du poids humide de substrat mis en oeuvre; ces taux d'inoculation sont généralement recommandés par les producteurs de mycélium.

Les "kits", ainsi constitués et éventuellement emballés dans un film plastique noir macroperforé, sont placés en salle d'incubation, dans laquelle sont établies les conditions optimales pour la phase d'envahissement du substrat par le mycélium. Parmi **c**elles-ci, citons notamment une plage de température optimale d'incubation, de 25 à 28°C dans le substrat et une humidité relative proche de la saturation.

Afin d'éviter la déshydratation du substrat lorsque les conditions d'humidité relative sont difficilement contrôlables, les "kits" peuvent être emballés, pendant la période d'incubation, dans des sacs plastiques perméables aux gaz ou microperforés.

Le terme de la période d'incubation est théoriquement atteint lorsque le scleroderme brunâtre apparaît en surface des "kits".

La durée de la période d'incubation dépend des dimensions des panneaux utilisés pour constituer les "kits" ainsi que de leur composition, mais dans des conditions normales elle n'excédera pas deux à trois mois. Le local d'incubation comporte de préférence des ventilateurs assujettis à une sonde de température placée dans le substrat de façon à pouvoir pallier un éventuel problème de surchauffe du substrat, par introduction d'air frais filtré dans le local.

Après incubation, les "kits" sont retirés des sacs plastiques perméables aux gaz ou microperforés et placés en chambre de culture (30) (figure 3).

La période de production comporte en principe deux phases: la première, appelée phase d'initiation, correspond au développement des primordia; la seconde, appelée phase de fructifi- cation, à celui des carpophores. Lors de la première phase, on induit la formation des primordia par application d'un choc thermique (diminution brutale de la température dans le substrat) et d'un choc hydrique (augmentation importante de la teneur en eau de substrat). Ce double choc est provoqué par immersion ou arrosage des "kits" dans ou à l'eau froide et, éventuellement par une diminution de température dans la chambre de culture (30).

Lors du cycle de production suivant l'exemple, les conditions régnant dans la chambre de culture, en première phase, étaient les suivantes:
- - éclairement :: intensité de 150 lux avec une photopériode de douze heures par jour;
- - température :: abaissement de la température dans le substrat par application du choc thermique à l'eau froide et,
éventuellement, diminution de la température de la chambre à 15°C jusqu'à apparition des primordia;
- - humidité relative :: environ 95%;
- - aération :: les taux de renouvellement et de circulation de l'air filtré sont déterminés sur base de la charge en substrat.

Dans ces conditions, les premiers primordia apparaissent après une quinzaine de jours au plus tard.

Pendant la deuxième phase du cycle de production, la température est stabilisée à 20°C environ et l'humidité relative à 80% environ, les autres paramètres restant inchangés. Dans ces conditions, la durée maximale de cette deuxième phase n'excédera pas huit mois, le terme étant choisi en fonction du type d'utilisateur. La période de fructification comportera plusieurs volées, séparées par des phases de repos et au cours desquelles il est nécessaire de réinduire la formation de nouveaux primordia en appliquant un nouveau choc thermo-hydrique. En effet, la production de carpophores s'accompagne d'une déshydratation du substrat. Il est donc nécessaire de réhydrater après chaque récolte. La durée de production d'une volée varie de deux à quatre semaines et la quantité de carpophores récoltés à chaque nouvelle volée se réduira progressivement jusqu'à épuisement du substrat. Le rôle du film plastique noir macroperforé est d'assurer une bonne répartition des carpophores sur la surface des "kits".

Les étapes de la culture du SHII-TAKE, selon la technique se référant à l'invention, peuvent être résumées comme suit:
- réception des panneaux; stockage dans un local sec et sain, éventuellement muni d'un éclairage ultra-violet;
- découpe des panneaux dans le format voulu;
- humidification des panneaux jusqu'à une teneur en eau de 70% environ, à l'aide d'eau alimentaire à 25°C, additionnée ou non de fongicides agréés;
- inoculation des tranches de culture, à l'aide des souches sélectionnées, et à des taux de 1 à 5% du poids humide de substrat mis en oeuvre;
- incubation sous film plastique noir macroperforé, pendant deux à trois mois, à une température de 25 à 28°C dans le substrat et une humidité relative proche de la saturation;
- initiation fructifère induite par un choc thermo-hydrique provoqué par l'immersion ou l'arrosage des "kits" dans ou à l'eau froide et par l'établissement de la photopériode; éventuellement diminution de la température dans la salle de production jusqu'à 15°C;
- fructification à une température de 20-21°C environ et une humidité relative d'environ 80% avec réinduction fructifère après des phases de repos.

L'utilisation du sac plastique perméable aux gaz, ou microperforé, évite la déshydratation du substrat en cours d'incubation et entrave le développement de certains compétiteurs, tel le trichoderma.

Le strict respect des conditions d'hygiène permet toutefois d'éviter ce dernier problème.

Dans le cadre d'une utilisation industrielle des panneaux en culture de champignons, il est prudent de recourir à l'emploi de produits fongicides agréés.

L'application correcte du procédé devrait assurer un rendement net d'environ 10% du poids humide de substrat, pour un cycle de culture de quatre à six mois.

Les principaux avantages de cette technique culturale sont les suivants:
- la structure du substrat permet des manipulations aisées et pourrait conduire à une mécanisation du procédé de mise en oeuvre;
- dans un endroit sec, le substrat peut être stocké pendant une longue période, l'approvisionnement en substrat devient donc indépendant d'un cycle saisonnier;
- le procédé de fabrication permet d'éviter la contrainte du traitement de pasteurisation;
- le substrat dispose d'une bonne réserve nutritive sous un volume réduit;
- la composition et la pureté du substrat garantissent une production régulière de champignons de qualité;
- une réduction des coûts de production et des investissements est dégageable par le producteur;
- le substrat épuisé est facilement éliminable par compostage.

Il va de soi que l'invention n'est pas limitée par l'exemple décrit et que de multiples variantes de composition des panneaux et de technique culturale, peuvent être utilisées.

L'exemple décrit porte sur la technique de culture du SHII-TAKE sur "kits-substrat"; l'invention peut être utilisée pour toute autre méthode de culture (culture en lits ou en murs portables) et à toute autre espèce appartenant au groupe des champignons sylvestres lignivores ou potentiellement lignivores.

Les producteurs professionnels pourront adapter cette technique à leur type d'installation et à leur méthode personnelle de production.

La principale caractéristique de cette invention reste l'emploi du panneau de fibres de bois comme substrat pour la culture des champignons.

## Revendications

1. Procédé pour la culture des champignons, suivant lequel on soumet un substrat inoculé de mycélium à des conditions usuelles de température et d'humidité relative favorisant d'abord le développement mycélien et ensuite la croissance des carpophores, caractérisé en ce qu'on utilise comme substrat au moins un panneau essentiellement composé de fibres de bois dont la cohésion est assurée substantiellement par des constituants naturels du bois.

2. Procédé selon la revendication 1, caractérisé en ce que les fibres de bois proviennent d'essences feuillues, dont notamment le chêne et le peuplier.

3. Procedé selon la revendication 1, caractérisé en ce qu'on enrichit le panneau à l'aide de matières organiques azotées.

4. Procédé selon la revendication 1, caractérisé en ce qu'on emballe le substrat dans un film plastique noir macroperforé, qu'on maintient ce film pendant toute la durée du cycle de culture.

5. Procédé selon la revendication 1, caractérisé en ce qu'on mouille le panneau de fibres avant inoculation par immersion ou aspersion dans ou à l'eau à 25°C et dans des conditions rigoureuses d'hygiène, jusqu'à une teneur en eau de 70%.

6. Procédé selon la revendication 5, caractérisé en ce qu'on ajoute dans l'eau d'hydratation du panneau, un fongicide agréé en culture de champignons.

7. Substrat, pour la culture des champignons, inoculé de mycélium des champignons de culture, caractérisé en ce qu'il est constitué d'au moins un panneau essentiellement composé de fibres de bois et dont la cohésion est assurée substantiellement par des éléments naturels du bois, dont la lignine.

8. Substrat selon la revendication 7, caractérisée en ce que sa densité est inférieure à 500 kg/m³.

9. Substrat selon la revendication 7, caractérisé en ce que les fibres de bois proviennent des abres feuillus, en particulier de chêne et de peuplier.

10. Substrat selon la revendication 7, caractérisé en ce qu'il est enrichit de matières organiques azotées.

11. Utilisation d'un substrat constitué d'un panneau essentiellement composé de fibres de bois dont la cohésion est assurée substantiellement par des constituants naturels du bois pour la culture des champignons sylvestres lignivores et potentiellement lignivores, appartenant à la classe des Basidiomycètes et, en particulier, du SHII-TAKE.

## Patentansprüche

1. Anbauverfahren von Pilzen, bei dem man ein mit Myzel inokuliertes Substrat üblichen Bedingungen der Temperatur und der relativen Feuchtigkeit unterwirft, die zunächst die Entwicklung des Myzels und daran anschließend die Entwicklung der Fruchtträger begünstigen, dadurch gekennzeichnet, daß man als Substrat mindestens eine im wesentlichen aus Holzfasern zusammengesetzte Platte verwendet, deren Zusammenhalt im wesentlichen durch natürliche Holzbestandteile gewährleistet wird.

2. Anbauverfahren nach Anspruch 1, dadurch gekennzeichnet, daß die Holzfasern aus Laubholzarten, insbesondere Eiche und Pappel stammen.

3. Anbauverfahren nach Anspruch 1, dadurch gekennzeichnet, daß man die Platte mit organischen Stickstoffmaterialien anreichert.

4. Anbauverfahren nach Anspruch 1, dadurch gekennzeichnet, daß man das Substrat in eine schwarze, makrogelochte Plastikfolie verpackt und daß man die Folie während der gesamten Dauer der Kultur erhält.

5. Anbauverfahren nach Anspruch 1, dadurch gekennzeichnet, daß man die Holzfaserplatte vor der Beimpfung durch Unter- tauchen oder Besprühen mit Wasser von 25 °C unter strengen Hygienebedingungen bis zu einem Wassergehalt von 70 % befeuchtet.

6. Anbauverfahren nach Anspruch 5, dadurch gekennzeichnet, daß man dem Wasser zur Befeuchtung der Platte ein bei der Aufzucht von Pilzen zugelassenes Fungizid beifügt.

7. Substrat für den Anbau von Pilzen, inokuliert mit Myzel von Kulterpilzen, dadurch gekennzeichnet, daß es aus mindestens einer Platte besteht, die im wesentlichen aus Holzfasern besteht, deren Zusammenhalt im wesentlichen durch natürliche Holzbestandteile, darunter Lignin, gewährleistet ist.

8. Substrat nach Anspruch 7, dadurch gekennzeichnet, daß seine Dichte unter 500 kg/m³ liegt.

9. Substrat nach Anspruch 7, dadurch gekennzeichnet, daß die Holzfasern von Laubholzarten, insbesondere Eiche und Pappel, stammen.

10. Substrat nach Anspruch 7, dadurch gekennzeichnet, daß es mit organischen Stickstoffmaterialien angereichert ist.

11. Verwendung eines von einer Platte, die im wesentlichen aus Holzfasern zusammengesetzt ist, deren Zusammenhalt im wesentlichen durch natürliche Holzbestandteile gewährleistet wird, gebildeten Substrats für den Anbau von holzfressenden sowie potentiell holzfressenden Wald-Pilzen, die der Klasse der Basidiomyceten angehören, und insbesondere von SHII-TAKE.

## Claims

1. Process for the culture of mushrooms according to which substratum inoculated with mycelium is put in the usual conditions of temperature and humidity facilitating the development of the mycelium and afterwards the growth of the fruit bodies, characterised by using as substratum at least a panel which is substantially composed of wood fibres with an internal bond substantially made of natural elements of wood.

2. Process according to claim 1, characterised in that the wood fibres are from leaf hardwoods, such as oak and poplar.

3. Process according to claim 1, characterised in that the panel is enriched with organic nitrogenous material.

4. Process according to claim 1, characterised in that the substratum is wrapped in a macroperforated black plastic film which is kept during the whole culture cycle.

5. Process according to claim 1, characterised in that the fibre panel is humidified before spawning by soaking in or sprinkling with water at 25° C and in strict hygienic conditions, up to a water content of 70 %.

6. Process according to claim 5, characterised in that an authorized fungicide is added to the water for humidification of the panel.

7. Substratum for mushroom culture, inoculated with mycelium of mushroom culture, characterised in that it consists of at least one panel substantially composed of wood fibres and of which the internal bond is made by the natural elements of the wood, such as lignin.

8. Substratum according to claim 7, characterised in that its density is lower than 500 kg/m3.

9. Substratum according to claim 7, characterised in that the wood fibres originate from leaf hardwoods, in particular oak and poplar.

10. Substratum according to claim 7, characterised in that it is enriched with organic nitrogenous material.

11. Use of a substratum composed by a panel, substantially made of wood fibres with an internal bond made substantially of natural elements of wood, for the culture of wood colonising or potentially wood colonising mushrooms belonging to the Basidiomycetes group and, in particular, Shii-take.
